# EUROPEAN PATENT SPECIFICATION

(11) **EP 4 411 143 B1**
(45) Date of publication and mention of the grant of the patent: **15.04.2026**
(21) Application number: 24152034.5
(22) Date of filing: 16.01.2024
(51) Int. Cl.: F04B 17/03, F04D 13/06, F04D 29/42, G05D 16/00

(54) **PRESSURE SENSING DEVICE SUITABLE FOR AN ELECTRIC PUMP AND ELECTRIC PUMP EQUIPPED WITH IT**
DRUCKMESSVORRICHTUNG FÜR EINE ELEKTRISCHE PUMPE UND ELEKTRISCHE PUMPE DAMIT
DISPOSITIF DE DÉTECTION DE PRESSION APPROPRIÉ POUR UNE POMPE ÉLECTRIQUE ET POMPE ÉLECTRIQUE ÉQUIPÉE DE CELUI-CI

(30) Priority: 01.02.2023 IT 202300001626
(43) Date of publication of application: 07.08.2024
(73) Proprietor: Dab Pumps S.p.A., 35035 Mestrino (Padova) (IT)
(72) Inventor: CAILOTTO, Pietro, 35035 MESTRINO (PD) (IT); AGNOLUCCI, Barbara, 35035 MESTRINO (PD) (IT); MOLON, Marco, 35035 MESTRINO (PD) (IT); CAPPOCCHIN, Michele, 35035 MESTRINO (PD) (IT)
(74) Representative: De Filippis, Sara

(56) References cited:
- EP-A1- 1 074 745
- EP-A1- 2 990 653
- EP-A1- 3 879 109
- JP-A- 2005 163 554
- US-A1- 2017 107 986

## Description

The present invention refers generically to a pressure sensing device.

More in detail, the present invention refers to a pressure sensing device adapted to be mounted on electric pumps equipped with an inverter.

To date, electromechanical pumps comprise pressure sensing instruments placed both underneath the pump body, for sensing the pressure between delivery and suction, and attached directly to the pump itself. Placing the sensor inside the same casing that contains the pump makes it possible to maintain a degree of insulation suitable for all types of installation.

This type of sensor is prone to obstructions caused by dirt and debris passing through the ducts, therefore requiring frequent maintenance.

However, when such maintenance operations must be carried out, it is necessary to intervene on the entire pump, even if the maintenance is targeted at a small part.

Furthermore, during these operations the section of the system where the pump is positioned must be completely isolated, to interrupt the flow of water.

Despite shutting down the system, it is not immediately possible to prevent the pipes from emptying when the sensor is removed, with the obvious consequence of flooding the floor of the room where the pump is installed.

The relevant prior art also comprises patent documents EP1074745A1, EP2990653A1, JP2005163554A, EP3879109A1 and US2017107986A1.

The aim of the present invention is to create a device for sensing pressure which overcomes the issues of the known art.

Another aim of the present invention is to realize a pressure sensing device that enables optimal maintenance management, making the process safe, easy and quick.

A further aim of the present invention is to realize a universal pressure sensing device that can be mounted on any type of electric pump.

These and other aims are achieved by a pressure sensing device, according to claim 1 attached hereto; other detailed technical features of the pressure sensing device, object of the invention, are reported in the subsequent dependent claims.

It is therefore an object of the invention a pressure sensing device adapted to be mounted on an electric pump, comprising a pressure sensor and a housing structure to house the pressure sensor, in turn equipped with a base and an insulating shell, wherein the pressure sensor is housed inside the base, while the insulating shell is positioned on the base to prevent jets of water from reaching the sensor.

Advantageously, this makes maintenance operations easier, while still guaranteeing IPX5 protection for all components of the electric pump.

Always according to the invention, the base can have an inner compartment to accommodate the sensor and an outer shape equipped with a series of projecting elements adapted to come into contact with the inner surface of the insulating shell.

In this way, advantageously, the shell is put on more easily and avoids collapsing on itself while maintaining its initial shape.

Furthermore, according to the invention, the base has hydraulic connection means on its sides, for example pipes, to connect the sensor with the suction and the delivery of the electric pump.

Furthermore, according to the invention, the hydraulic connection means each have a flow interruption means, for example taps to temporarily isolate the device from the suction and delivery of the pump, advantageously avoiding flooding of the room where the electric pump was installed.

A further object of the invention is an electric pump equipped with this pressure sensing device.

Further objects and advantages of the present invention will be clearer from the following description, concerning a merely exemplifying and preferred, but not limiting, embodiment of a pressure sensing device, according to the present invention, and from the attached figures, in which:

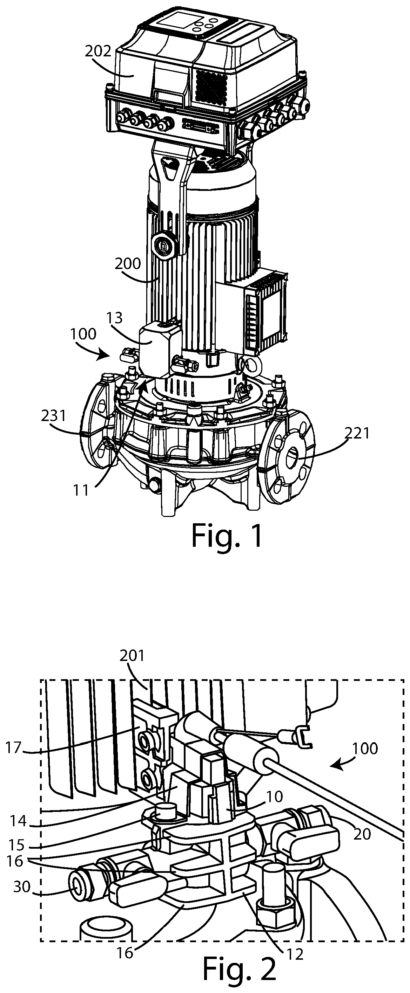

- Figure 1 is an overall view of an electric pump to which the sensing device of the invention is applied;
- Figure 2 is an enlargement of the electric pump of Figure 1, wherein the insulating shell has been removed;

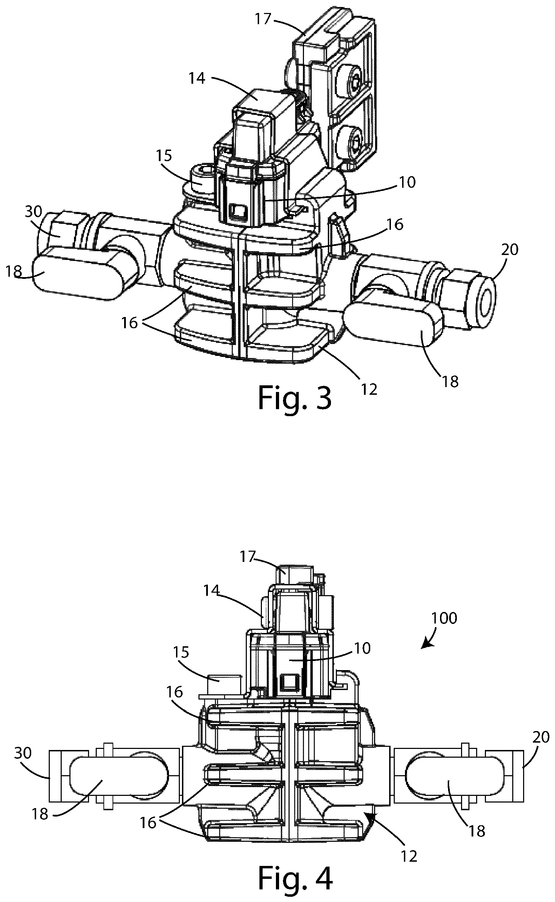

- Figure 3 is a perspective view of the sensing device of Figure 2,
- Figure 4 is a front view of the sensing device of Figure 2.

With reference to the above-mentioned figures, the pressure sensing device is indicated with the generic numerical reference 100.

In particular, this device 100, to be applied to an electric pump 200, comprises a pressure sensor 10, inserted in a removable housing structure 11.

In particular, the housing structure 11 has a base 12 and an insulating shell 13, which allows the pressure sensor 10 to be protected from water jets and from dust, according to the IPX5 protection degree.

The base 12 has an outer shape equipped with a series of projecting elements having the same length, for example fins 16, adapted to come into contact at their free end with the inner surface of the insulating shell 13, so as to hold it in place by friction.

Advantageously, in this way the base 12 maintains an adhesion to the insulating shell 13 suitable for holding it still, without weighing down the device 100 with an excess of material.

Furthermore, this shape also allows the shell 13 to slide more easily along the shape of the base 12, as it allows the shell itself to flex and adapt better to the shape of the base 12 itself.

On the two sides of the base 12 of the housing structure 11 for the pressure sensor 10 there are a first small tube 20 and a second small tube 30 connected respectively to the delivery 221 and the suction 231 of the pump 200 to which the device 100 is attached.

In particular, these small tubes 20 and 30 transmit the pressure of the system so that the sensor can sense its variations, without necessarily coming into contact with the water circulating inside the pump 200, advantageously reducing the risk of contaminating the sensor 10 with the system water and its contents.

Behind the base 12 of the housing structure 11, there is a pair of clinging plates 17 to stably couple the base 12 to the outer surface of the pump 200.

In particular, the pair of plates 17 has, on the two inner surfaces facing each other and intended to come into contact with the pump 200, a grinding adapted to increase clinging in the presence of any finish on the outer surface of the pump 200.

Operationally, the device 100 is coupled to the pump 200 via first fastening means 17, for example a pair of plates which act as jaws capable of clinging to a projecting element of the outer surface of the pump 200, for example a rib 201.

Subsequently, it is possible to connect the first small tube 20 to the delivery 221 of the pump 200 and the second small tube 30 to the suction 231 of the pump 200.

At this point, once the necessary couplings have been made between the sensor and the inverter, the pressure sensing device 100 is able to sense the pressure and to transmit it to the inverter 202 of the pump 200.

In case of maintenance operations, the user closes the taps 18 of the small tubes 20, 30, so as to avoid minimal water leaks, and removes the sensor 10.

In detail, the user removes the insulating shell 13 and can unscrew the screw that holds the shaped plate 14 in place, so as to be able to remove it and to access the compartment of the base 12 where the sensor is housed.

At this point, the sensor 10 can be cleaned, or replaced, or undergo other maintenance operations.

Once finished, it is possible to insert the sensor 10 again inside the base 12 and cover it with the shaped plate 14.

The user fixes the shaped plate to the base 12 using the screw and then places the shell 13 above the base 12, making it slide along the outermost surfaces of the projecting elements of the outer shape of the base 12 itself, until the open edge of the shell 13 matches with the lower surface of the base 12.

At this point, the IPX5 protection has been restored and the sensor can safely resume its function of sensing the system pressure.

From the description made, the features of the pressure sensing device, which is the object of the present invention, are clear, as well as its advantages are clear.

Finally, it is clear that numerous other variations can be made to the system in question, without departing from the principles of novelty inherent in the inventive idea, just as it is clear that, in practice, the implementation of the invention, the materials, the shapes and dimensions of the illustrated details may be extremely variable depending on the needs and they may be replaced with other equivalent ones.

## Claims

1. A pressure sensing device (100) adapted to be mounted on an electric pump (200),
comprising:
- a pressure sensor (10),
- a removable housing structure (11) for housing the pressure sensor (10) equipped with a base (12) and an insulating shell (13),
the pressure sensor (10) being housed inside the base (12) and the insulating shell being placed on the base (12) so as to prevent dust and water jets from reaching the sensor (10),
**characterized**
**in that** the base (12) has hydraulic connection means (20, 30) on its sides to connect the sensor (10) with the suction and delivery of the electric pump (200),
and **in that** the hydraulic connection means (20, 30) present each a flow interrupting means (18) to temporarily isolate the device (100) from the suction and delivery of the pump (200).

2. The pressure sensing device (100) as claimed in claim 1, **characterized in that** the base (12) has an inner compartment for housing the sensor (10) and an outer shape equipped with a series of projecting elements adapted to come into contact with the inner surface of the insulating shell (13).

3. The pressure sensing device (100) as claimed in one of claims 1-2 **characterized in that** the base (12) has a pair of clinging plates (17) to couple the base (12) to the outer surface of an electric pump (200).

4. The pressure sensing device (100) as claimed in claim 3, **characterized in that** the pair of plates (17) has two inner surfaces facing each other and intended to come into contact with the electric pump (200), at least one of which having a grinding adapted to increase the clinging to the outer surface of the electric pump (200).

5. An electric pump (200) equipped with a pressure sensing device (100) as claimed in one of claims 1-4.

## Patentansprüche

1. Druckmessvorrichtung (100) zur Montage an einer elektrischen Pumpe (200),
umfassend:
- einem Drucksensor (10),
- eine abnehmbare Gehäusestruktur (11) zur Unterbringung des Drucksensors (10), die mit einer Basis (12) und einer Isolierschale (13) ausgestattet ist,
der Drucksensor (10) im Inneren des Sockels (12) untergebracht ist und die Isolierschale so auf dem Sockel (12) angebracht ist, dass Staub und Wasserstrahlen nicht in den Sockel gelangen können den Sensor (10),
charakterisiert durch
dass der Sockel (12) an seinen Seiten hydraulische Anschlussmittel (20, 30) aufweist, um den Sensor (10) mit der Saug- und Druckseite der elektrischen Pumpe (200) zu verbinden,
und dass die hydraulischen Anschlussmittel (20, 30) jeweils ein Durchflussunterbrechungsmittel (18) aufweisen, um die Vorrichtung (100) vorübergehend vom Ansaugen und Fördern der Pumpe (200) zu trennen.

2. Druckmessvorrichtung (100) nach Anspruch 1, **dadurch gekennzeichnet, dass** der Sockel (12) ein inneres Fach zur Aufnahme des Sensors (10) und eine äußere Form aufweist, die mit einer Reihe von vorstehenden Elementen ausgestattet ist, die mit der Innenfläche der Isolierschale (13) in Kontakt kommen können.

3. Druckmessvorrichtung (100) nach einem der Ansprüche 1-2, **dadurch gekennzeichnet, dass** der Sockel (12) ein Paar Haftplatten (17) aufweist, um den Sockel (12) mit der Außenfläche einer elektrischen Pumpe (200) zu verbinden.

4. Druckmessvorrichtung (100) nach Anspruch 3, **dadurch gekennzeichnet, dass** das Plattenpaar (17) zwei einander zugewandte Innenflächen aufweist, die dazu bestimmt sind, mit der Elektropumpe (200) in Kontakt zu kommen, und von denen mindestens eine einen Schliff aufweist, der geeignet ist, die Anhaftung an der Außenfläche der Elektropumpe (200) zu erhöhen.

5. Elektrische Pumpe (200), die mit einer Druckmessvorrichtung (100) nach einem der Ansprüche 1-4 ausgestattet ist.

## Revendications

1. Dispositif de détection de pression (100) destiné à être monté sur une pompe électrique (200),
comprenant:
- un capteur de pression (10),
- une structure de logement amovible (11) pour loger le capteur de pression (10) équipé d'une base (12) et d'une enveloppe isolante (13),
le capteur de pression (10) étant logé à l'intérieur de la base (12) et la coque isolante étant placée sur la base (12) de manière à empêcher la poussière et les jets d'eau de l'atteindre le capteur (10),
**caractérisée en ce que**
**en ce que** la base (12) comporte sur ses côtés des moyens de connexion hydraulique (20, 30) pour relier le capteur (10) à l'aspiration et au refoulement de la pompe électrique (200),
et **en ce que** les moyens de connexion hydraulique (20, 30) présentent chacun un moyen d'interruption du débit (18) pour isoler temporairement le dispositif (100) de l'aspiration et du refoulement de la pompe (200).

2. Dispositif de détection de pression (100) selon la revendication 1, **caractérisé par le fait que** la base (12) a un compartiment intérieur pour loger le capteur (10) et une forme extérieure équipée d'une série d'éléments saillants adaptés pour entrer en contact avec la surface intérieure de la coque isolante (13).

3. Dispositif de détection de pression (100) selon l'une des revendications 1-2 est **caractérisé par le fait que** la base (12) comporte une paire de plaques d'accrochage (17) pour coupler la base (12) à la surface extérieure d'une pompe électrique (200).

4. Dispositif de détection de pression (100) selon la revendication 3, **caractérisé en ce que** la paire de plaques (17) présente deux surfaces intérieures se faisant face et destinées à entrer en contact avec la pompe électrique (200), au moins l'une d'entre elles présentant un meulage adapté pour augmenter l'adhérence à la surface extérieure de la pompe électrique (200).

5. Pompe électrique (200) équipée d'un dispositif de détection de pression (100) selon l'une des revendications 1-4.
